# EUROPÄISCHE PATENTSCHRIFT

(11) **EP 0 380 020 B1**
(45) Veröffentlichungstag und Bekanntmachung des Hinweises auf die Patenterteilung: **24.11.1993**
(21) Anmeldenummer: 90101209.6
(22) Anmeldetag: 22.01.1990
(51) Int. Cl.: A01B 29/04, A01B 49/06

(54) **Bodenwalze**
Ground roller
Rouleau

(30) Priorität: 23.01.1989 DE 3901883
(43) Veröffentlichungstag der Anmeldung: 01.08.1990
(73) Patentinhaber: Amazonen-Werke H. Dreyer GmbH & Co. KG, D-49205 Hasbergen (DE)
(72) Erfinder: Higgen, Reinhard, D-2872 Hude 1 (DE)

(56) Entgegenhaltungen:
- EP-A- 0 216 050
- EP-A- 0 223 134
- EP-A- 0 245 648
- EP-A- 0 264 621
- EP-A- 0 299 190
- EP-A- 0 299 290
- FR-A- 2 189 226

## Beschreibung

Die Erfindung betrifft eine Bodenwalze gemäß dem Oberbegriff des Patentanspruchs 1.

Eine derartige Bodenwalze ist beispielsweise durch die EP-A- 02 16 050 bekannt.

Eine derartige Bodenbearbeitungskombination hat sich bereits in der Landwirtschaft bewährt. Bei dem Einsatz dieser Bodenbearbeitungskombination in Verbindung mit einer Einzelkornsämaschine hat sich jedoch gezeigt, daß es nicht immer wünschenswert ist, daß der Boden über die gesamte Arbeitsbreite verfestigt wird. Es wird hier vorgeschlagen, die Gummireifen einzeln mittels einer an einem Querträger verstellbar befestigten Halterung anzuordnen. Diese Art der Aufhängung ist jedoch sehr aufwendig.

Der Erfindung liegt die Aufgabe zugrunde, insbesondere für Einzelkornsaat ein optimal angedrücktes Saatbett bei großer Leichtzügigkeit der Maschine zu erreichen und hierfür eine einfach ausgebildete Bodenwanne vorzuschlagen.

Diese Aufgabe wird erfindungsgemäß durch die Maßnahmen gemäß des Kennzeichen des Anspruches 1 gelöst.

Infolge dieser Maßnahmen ergibt sich auf einfachste Weise ein optimales, angedrücktes Saatbett, in welchem die Saatkörner in den von den Säscharen gezogenen Furchen abgelegt werden können. Insbesondere können die Gummireifen unterschiedlichen Reihenabständen angepaßt werden, so daß die Gummireifen immer den Bereich verdichten, in welchem die Saatkörner abgelegt werden. Eine äußerst einfache Anordnung der Gummireifen in unterschiedlichen Abständen zueinander auf dem drehbaren Traggerüst, so daß sie entsprechend des gewählten Reihenabstandes fluchtend vor den Säscharen der Sämaschine angeordnet sind, ergibt die Befestigung der Gummireifen auf felgenartigen Tragelementen, wobei zwischen den felgenartigen Tragelementen und dem drehbaren Traggerüst (Profilrohr) Klemmhalterungselemente angeordnet sind, mit denen die Gummireifen in den festgelegten Abständen auf dem Traggerüst wunschgemäß festklemmbar und verschiebbar sind. Vorzugsweise sind die Klemmhalterungselemente als Klemmbügel ausgebildet.

Um die Gummmireifen praktisch unmittelbar dicht nebeneinander schieben zu können und trotzdem die Gummireifen fest auf dem drehbaren Traggerüst festklemmen zu können, ist erfindungsgemäß vorgesehen, daß die Klemmhalterungselemente eine Breite aufweisen, die größer als die Breite der Reifen ist. Hierdurch wird die Vorraussetzung geschaffen, daß an den Klemmhalterungselementen in deren seitlichen Außenbereich jeweils Klemmvorrichtungen, beispielsweise Klemmschrauben angeordnet werden können, so daß auch bei dieser dichten Anordnung der Gummireifen nebeneinander sie mittels eines Steckschlüssels festzuklemmen sind. Hierzu sollten sich die Klemmvorrichtungen zumindest annähernd seitlich neben den Reifen befinden.

Desweiteren ist es möglich, daß in der Gerätekombination Bodenwalzen mit verschiedenen Abständen der Reifen zueinander sowie Sämaschinen mit verschiedenen Reihenzahlen einsetzbar sind. Hierdurch kann die Bodenbearbeitungskombination durch den Austausch der einzelnen Bodenwalzen oder dem Umrüsten der Bodenwalze mit einer unterschiedlichen Reifenanzahl sowohl im Einsatz mit einer Einzelkornsämaschine wie auch mit einer Getreidekornsämaschine herkömmlicher Bauart eingesetzt werden. Selbstverständlich ist es auch möglich, daß die Gummireifenwalze gegen anders ausgebildete Bodenwalzen, beispielsweise Packerwalzen, Stabwalzen etc. austauschbar ist.

Weitere Einzelheiten der Erfindung sind den übrigen Unteransprüchen, der Beispielsbeschreibung und den Zeichnungen zu entnehmen. Hierbei zeigen
- Fig. 1: eine erfindungsgemäß ausgebildete Bodenwalze als Bestandteil einer Sä- und Bestellkombination in Seitenansicht,
- Fig. 2: die Sä- und Bestellkombination in der Draufsicht,
- Fig. 3: die erfindungsgemäß ausgerüstete Bodenwalze in der Vorderansicht, wobei die Gummireifen einen relativ großen Abstand zueinander aufweisen,
- Fig. 4: die Bodenwalze gemäß Fig. 3, wobei die einzelnen Reifen jedoch dicht zusammengeschoben sind und zusätzliche Reifen auf dem Traggerüst angeordnet sind,
- Fig. 5: die Anordnung eines Gummireifens auf dem drehbaren Traggerüst in der Ansicht IX - IX und
- Fig. 6: die Anordnung des Gummireifens und dessen Befestigung auf dem drehbaren Traggerüst in der Ansicht X - X.

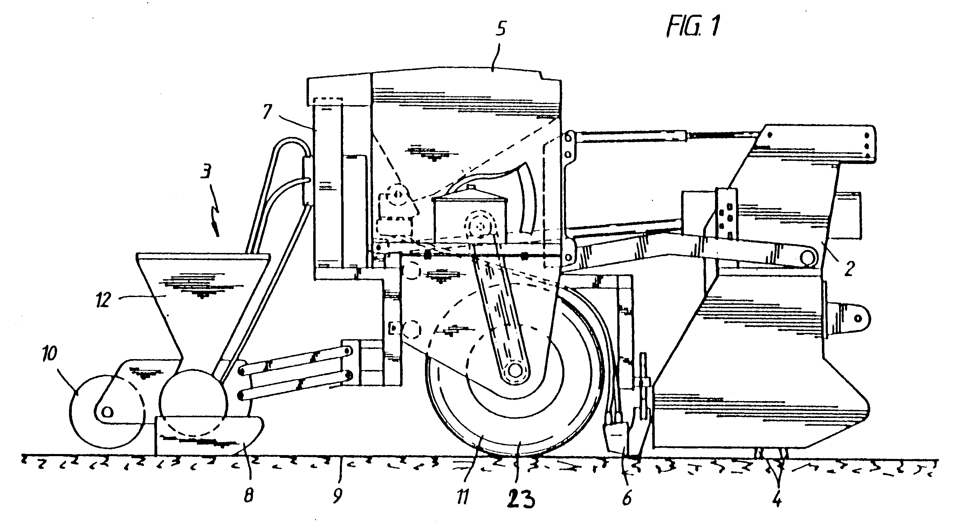

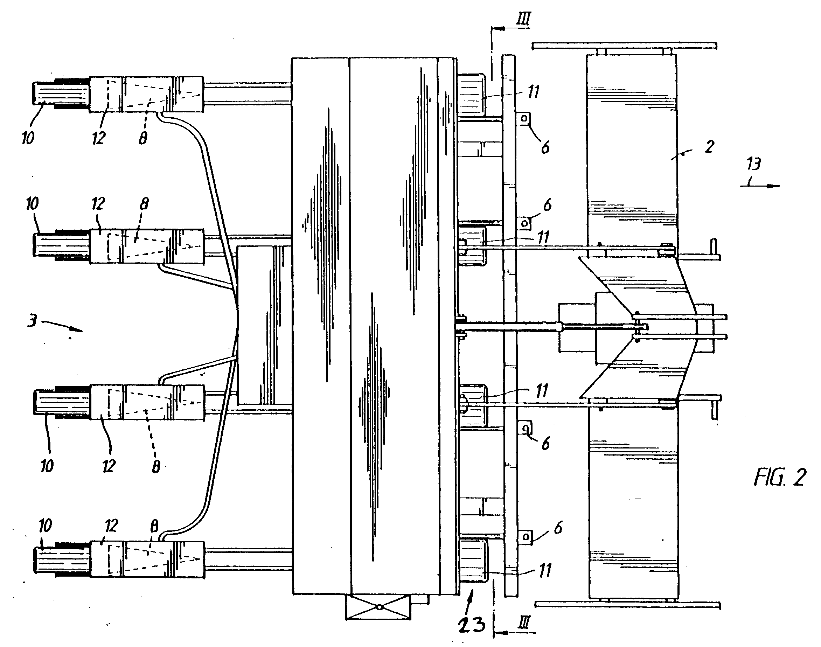

Die Bodenwalze 23 ist Bestandteil der Sä- und Bestellkombination gemäß Fig. 1, welche aus einem vor der Bodenwalze 23 angeordneten Bodenbearbeitungsgerät, beispielsweise einer Kreiselegge 2, der als Nachlaufwalze 23 ausgebildeten Bodenwalze und der nachgeordneten Einzelkornsämaschine 3 besteht. Die Kreiselegge 2 weist die angetriebenen Bodenbearbeitungswerkzeuge 4 auf. Auf der Bodenwalze 1 ist zusätzlich noch der Düngerbehälter 5 aufgesattelt, von welchem aus über Rohrleitungen den Düngersäscharen 6, welche zwischen der Bodenwalze 23 und dem Bodenbearbeitungsgerät 2 angeordnet sind, die Düngemittel zugeführt werden. Hinter dem Düngerbehälter 5 ist das Sauggebläse 7 angeordnet, über welches ein Vakuum für den Vereinzelungsmechanismus der Einzelkornsägeräte der Einzelkornsämaschine 3 erzeugt wird. Die Einzelkornsägeräte der Einzelkornsämaschine 3 weisen jeweils ein Säschar 8 auf, mit welchem im Boden 9 Furchen gezogen werden und in welchen das Saatgut abgelegt wird. Hinter dem Säschar 8 ist jeweils eine Andruckrolle 10 angeordnet. Wie aus der Fig. 2 zu entnehmen ist, weist die Bodenwalze 23 die gleiche Anzahl von Gummireifen 11 wie die Einzelkornsämaschine 3 Säschare 8 besitzt auf. Jedem Sägerät 12 der Einzelkornsämaschine 3 ist ein Säschar 8 zugeordnet. Die Gummireifen 11 der Bodenwalze 23 sind in Fahrtrichtung 13 gesehen fluchtend vor den Säscharen 8 der Einzelkornsämaschine 3 angeordnet.

Die Bodenwalze 23 besteht aus dem zentralen Tragrahmen 19, dem drehbaren Traggerüst 24, welches als Vierkantrohr ausgebildet ist, sowie den Gummireifen 11. Innerhalb der Gummireifen 11 sind die drei Abstützringe 25 angeordnet. Die Gummireifen 11 sind auf felgenartigen Tragelementen 26 befestigt. Zwischen den felgenartigen Tragelementen und dem Vierkantrohr 24 sind die als Klemmbügel 27 ausgebildeten Klemmhalterungselemente angordnet, mit denen die Gummireifen in festgelegten Abständen auf dem Vierkantrohr 24 festklemmbar und verschiebbar sind. Die Klemmbügel 27 werden mittels der Klemmschrauben 28 festgeklemmt. Die Klemmbügel 27 weisen eine größere Breite auf, als die Breite der Reifen ist. Die Klemmschrauben 28 sind in den Löchern 29, die sich in den Klemmbügeln 27 in deren seitliche Außenbereiche befinden, angeordnet. Die Klemmschrauben 28 befinden sich zumindest annähernd seitlich neben den Reifen 11. Die felgenartigen Tragelemente 26 weisen weiterhin die Stützringe oder Stützscheiben 30 ausgebildeten Elemente auf, welche durch die Schraube 31 festgeklemmt werden. Desweiteren ist jeder Klemmbügel 27 auf seiner einen Seite an dem Abstandsring 32 angeschweißt, während das andere Ende 33 abgewinkelt ist und gegen das angeschweißte Ende 34 des anderen Klemmbügels mittels der Klemmschraube 28 gezogen wird.

Durch Lösen der Klemmschraube 28 können die Gummireifen 11 auf dem Vierkantrohr 24 seitlich verschoben und nach dem Einstellen in den gewünschten Abstand zueinander wieder festgeklemmt werden. Hierdurch ist es möglich, sich an unterschiedlichen Reihenabständen der Säschare 8 der Einzelkornsämaschine 3 bei verschiedenen Kulturen anzupassen.

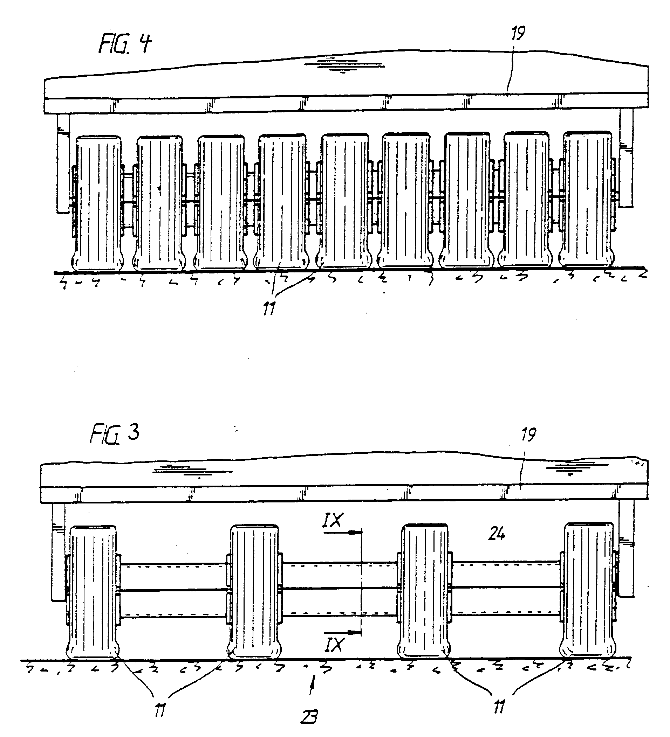

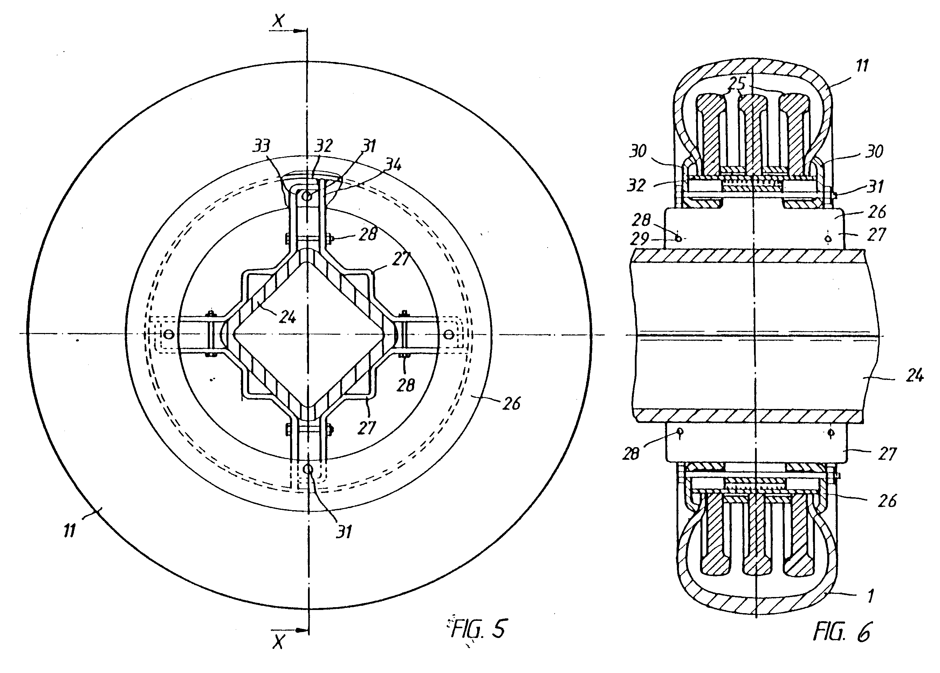

Durch die Anordnung mehrer Gummireifen 11 auf dem Tragrohr 24 läßt sich ohne weiteres die Bodenwalze gemäß Fig. 3 in die Bodenwalze gemäß Fig. 4 umrüsten. Dadurch, daß die Klemmschrauben 28 seitlich neben den Reifen 11 sich befinden, ist es möglich, daß auch bei dicht nebeneinander angeordneten Reifen 11 gemäß Fig. 4 die Klemmschrauben 28 mittels eines Steckschlüssels gelöst oder festgezogen werden können.

Wenn die Säschare 8 der Einzelkornsämaschine 3 in sehr engen Reihenabständen nebeneinander angeordnet sind, ist es möglich, mehrere Gummireifen 11 anzuordnen, wie dieses in Fig. 4 gezeigt ist. Somit ist jeweils bei engen Reihenabständen wieder ein vorlaufender Gummireifen 11 der Nachlaufwalze 23 einem nachlaufenden Säschar 8 einer Einzelkornsämaschine 3 zugeordnet.

Selbstverständlich läßt sich in der Bestell- und Säkombination gemäß Fig. 1 bei anderen Einsatzverhältnissen, falls erwünscht, an Stelle einer Bodenwalze 23 mit Gummireifen 11 eine anders ausgebildete Bodenwalze, beispielsweise Packerwalzen, Stabwalze etc. einsetzen.

## Patentansprüche

1. Bodenwalze (23), bestehend aus im Abstand nebeneinander angeordneten Gummireifen (11), insbesondere zum Einsatz in Bodenbearbeitungs, Sä- und/oder Bestellkombinationen, sind, wobei die Gummireifen (11) in unterschiedlichen Abständen zueinander auf dem Traggerüst (24) anzuordnen sind, dadurch gekennzeichnet, daß die Gummireifen (11) auf einzelnen Tragelementen, wie Felgen (26) etc. angeordnet sind, welche auf einer durchgehenden Welle oder einem durchgehenden Tragrohr (24) befestigt sind, daß das Traggerüst (24), auf dem die Gummireifen (11) verschiebbar angeordnet sind, als Profilrohr, beispielsweise als Vierkantrohr ausgebildet sind, daß die Gummireifen auf felgenartigen Tragelementen befestigt sind, daß zwischen den felgenartigen Tragelementen und dem drehbaren Traggerüst (24) (Profilrohr) Klemmhalterungselemente (27) angeordnet sind, mit denen die Gummireifen (11) in festgelegten Abständen auf dem Traggerüst (24) festklemmbar und verschiebbar sind.

2. Bodenwalze nach Anspruch 1, dadurch gekennzeichnet, daß die Tragelemente mit den Gummireifen (11) auf der Welle oder Tragrohr (24) in verschiedenen Abständen zueinander zu befestigen sind.

3. Bodenwalze nach Anspruch 1, dadurch gekennzeichnet, daß in einer Gerätekombination Bodenwalzen (23) mit verschiedenen Abständen der Reifen zueinander sowie mit verschiedenen Reifenzahlen einsetzbar sind.

4. Bodenwalze nach einem oder mehreren der vorstehenden Ansprüche, dadurch gekennzeichnet, daß die Klemmhalterungselemente (27) als Klemmbügel (27) ausgebildet sind.

5. Bodenwalze nach einem oder mehreren der vorstehenden Ansprüche, dadurch gekennzeichnet, daß die Klemmhalterungselemente (27) eine Breite aufweisen, die größer als die Breite der Reifen (11) ist.

6. Bodenwalze nach einem oder mehreren der vorstehenden Ansprüche, dadurch gekennzeichnet, daß an den Klemmhalterungselementen (27) in deren seitlichen Außenbereich jeweils Klemmvorrichtungen (28), beispielsweise Klemmschrauben (28), angeordnet sind.

7. Bodenwalze nach einem oder mehreren der vorstehenden Ansprüche, dadurch gekennzeichnet, daß die Klemmvorrichtung (28) sich zumindest annähernd seitlich neben dem Reifen (11) befindet.

## Claims

1. Ground roller (23), comprising rubber tyres (11), which are disposed adjacent one another with a spacing therebetween, more especially for use in ground-working, sowing and/or cultivating combinations, the rubber tyres (11) having to be disposed on the supporting frame (24) at variable spacings from one another, characterised in that the rubber tyres (11) are disposed on individual supporting members, such as rims (26), etc., which are mounted on a continuous shaft or on a continuous tubular support (24), in that the supporting frame (24), on which the rubber tyres (11) are displaceably disposed, is in the form of a tubular profile, for example a square pipe, in that the rubber tyres are mounted on rim-like supporting members, in that retaining clamps (27) are disposed between the rim-like supporting members and the rotatable supporting frame (24) (tubular profile), the rubber tyres (11) being firmly clampable and displaceable by means of said retaining clamps on the supporting frame (24) at fixed spacings from one another.

2. Ground roller according to claim 1, characterised in that the supporting members are to be mounted with the rubber tyres (11) on the shaft or tubular support (24) at different spacings from one another.

3. Ground roller according to claim 1, characterised in that ground rollers (23) are insertable in a combination of implements with the tyres at different spacings from one another and with different numbers of tyres.

4. Ground roller according to one or more of the preceding claims, characterised in that the retaining clamps (27) are in the form of bow-shaped clamps (27).

5. Ground roller according to one or more of the preceding claims, characterised in that the retaining clamps (27) have a width which is greater than the width of the tyres (11).

6. Ground roller according to one or more of the preceding claims, characterised in that clamping means (28), for example clamping screws (28), are disposed on the retaining clamps (27) in their respective lateral external region.

7. Ground roller according to one or more of the preceding claims, characterised in that the clamping means (28) is situated at least approximately laterally adjacent the tyre (11).

## Revendications

1. Rouleau de sol (23) composé de pneumatiques (11) disposés à intervalle, notamment pour être intégré à une combinaison de machine pour le travail du sol et/ou de semoir, les pneumatiques (11) se montant à des intervalles différents sur l'ossature de support (24), rouleau caractérisé en ce que les pneumatiques (11) sont montés sur des éléments de support distincts tels que des jantes (26) ou autres... qui sont fixés sur un axe traversant ou un tube de support (24) traversant, ce tube (24) sur lequel peuvent coulisser les pneumatiques (11) étant un tube profilé, par exemple à section carrée, et les pneumatiques sont fixés sur les éléments de support en forme de jantes et entre les éléments de support en forme de jantes et le tube de support 24 rotatif (tube profilé) il y a des éléments de fixation par serrage (27) qui permettent de serrer les pneumatiques (11) à des intervalles déterminés sur le tube de support (24) ou de les coulisser sur celui-ci.

2. Rouleau de sol selon la revendication 1, caractérisé en ce que les éléments de support sont fixés avec les pneumatiques (11) sur l'axe ou tube de support (24) à des intervalles différents.

3. Rouleau de sol selon la revendication 1, caractérisé en ce qu'une combinaison de machine comprend des rouleaux de sol (23) avec des pneumatiques à des intervalles différents et des nombres de pneumatiques différents.

4. Rouleau de sol selon une ou plusieurs des revendications précédentes, caractérisé en ce que les éléments de fixation par serrage (27) sont en forme d'étriers de serrage (27).

5. Rouleau de sol selon une ou plusieurs des revendications précédentes, caractérisé en ce que les éléments de fixation par serrage (27) ont une largeur supérieure à la largeur des pneumatiques (11).

6. Rouleau de sol selon une ou plusieurs des revendications précédentes, caractérisé en ce que les éléments de fixation par serrage (27) comportent dans leur zone extérieure latérale chaque fois des dispositifs de serrage (28), par exemple des vis de serrage (28).

7. Rouleau de sol selon une ou plusieurs des revendications précédentes, caractérisé en ce que le dispositif de serrage (28) se trouve au moins approximativement à côté des pneumatiques (11).
